# EUROPÄISCHE PATENTSCHRIFT

(11) **EP 3 544 145 B1**
(45) Veröffentlichungstag und Bekanntmachung des Hinweises auf die Patenterteilung: **22.12.2021**
(21) Anmeldenummer: 19158287.3
(22) Anmeldetag: 20.02.2019
(51) Int. Cl.: H02J 7/00, H02J 3/26, H02J 3/14, B60L 53/63

(54) **VERFAHREN ZUM LADEN VON ELEKTRISCHEN VERBRAUCHERN**
METHOD FOR LOADING OF ELECTRICAL CONSUMERS
PROCÉDÉ DE CHARGE DES CONSOMMATEURS ÉLECTRIQUES

(30) Priorität: 19.03.2018 DE 102018204157
(43) Veröffentlichungstag der Anmeldung: 25.09.2019
(73) Patentinhaber: Mahle International GmbH, 70376 Stuttgart (DE)
(72) Erfinder: BEEZ, Steve, 98666 Masserberg (DE); EWERT, Sebastian, 70180 Stuttgart (DE); HEINRICH, Nicole, 71691 Freiberg (DE); KREPULAT, Walter, 70563 STUTTGART (DE)
(74) Vertreter: BRP Renaud & Partner mbB Rechtsanwälte Patentanwälte Steuerberater

(56) Entgegenhaltungen:
- EP-A1- 2 919 352
- EP-A2- 2 735 468
- DE-A1-102011 084 216

## Beschreibung

Die Erfindung betrifft ein Verfahren zum Laden von elektrischen Verbrauchern, bspw. von Elektrofahrzeugen, an einem Stromnetz mit mehreren Phasen.

Elektrofahrzeuge laden heutzutage ein- oder mehrphasig mit Wechselstrom oder mit Gleichstrom. Die Ladung mit Wechselstrom ist dabei nach Norm im Betrieb von 6 bis 63 Ampere auf einer oder mehreren Phasen möglich. Viele Energieversorgungsunternehmen und Verteilernetzbetreiber fordern eine Vermeidung von Schieflast über 20 Ampere durch einzelne Verbraucher. Es sind jedoch Elektrofahrzeuge auf dem Markt, welche einphasig über 20 Ampere laden. Dadurch kann allerdings eine Schieflast entstehen, die über der von den Energieversorgungsunternehmen und Verteilnetzbetreibern vorgegebenen maximalen Schieflast liegt.

Die EP 2 919 352 A1 betrifft einen leistungsoptimierten Betrieb eines elektrischen Teilnehmers, wobei jeweils eine elektrische Größe an zumindest zwei Phasen eines Übergabepunktes zwischen einem Verteilnetz und dem Teilnehmernetz gemessen wird, wobei eine Differenzbetrag der gemessenen elektrischen Größe zwischen jeweils zwei Phasen ermittelt wird und der Teilnehmer derart betrieben wird, dass der Differenzbetrag verringert wird.

Der Erfindung liegt die Aufgabe zugrunde eine verbesserte oder zumindest andere Ausführungsform eines Verfahrens zum Laden von elektrischen Verbrauchern an einem Stromnetz mit mehreren Phasen bereit zu stellen, die sich insbesondere durch die Vermeidung von zu hohen Schieflasten auszeichnet.

Diese Aufgabe wird erfindungsgemäß durch den Gegenstand des unabhängigen Anspruchs gelöst. Vorteilhafte Weiterbildungen sind Gegenstand der abhängigen Ansprüche.
Die Erfindung basiert auf der Grundidee, die Phasenströme der einzelnen Phasen zu überwachen und entsprechend die Ladeleistung der Elektrofahrzeuge bzw. der elektrischen Verbraucher anzupassen, um die maximal zulässige Schieflast nicht zu überschreiten. Erfindungsgemäß ist daher vorgesehen, dass an einem Bilanzpunkt Phasenströme der Phasen des Stromnetzes gemessen werden, dass für jeden über den Bilanzpunkt an dem Stromnetz zum Laden angeschlossenen elektrischen Verbraucher bestimmt wird, über welche Phase der elektrische Verbraucher angeschlossen ist, und dass eine Schieflast der Phasen unterhalb eines Schieflastgrenzwertes gehalten wird, indem jedem zum Laden angeschlossenen elektrischen Verbraucher eine Leistungsvorgabe übermittelt wird. Dadurch besteht eine Regelungsmöglichkeit für die Phasenströme, sodass die Schieflast unterhalb des Schieflastgrenzwertes gehalten werden kann. Gleichzeitig kann, wenn an allen Phasen ein elektrischer Verbraucher zum Laden angeschlossen ist, ein höherer individueller Ladestrom erreicht werden, als bei einem Verfahren, in welchem die maximalen Ladeströme auf einen Grenzwert gedrosselt werden, bei welchem die Schieflastgrenze nicht überschritten werden kann. Der Schieflastgrenzwert ist üblicherweise durch das Energieversorgungsunternehmen oder den Verteilernetzbetreiber vorgegeben. Der Schieflastgrenzwert liegt bspw. bei 20 Ampere.

In der Beschreibung und den beigefügten Ansprüchen wird unter der Schieflast die aktuell größte auftretende Differenz der Lasten zwischen jeweils zwei beliebigen Phasen des Stromnetzes an dem Bilanzpunkt verstanden.

Eine günstige Möglichkeit sieht vor, dass die Leistungsvorgaben für die elektrischen Verbraucher derart eingestellt werden, dass jede Lastdifferenz zwischen jedem möglichen Paar der Phasen des Stromnetzes am Bilanzpunkt kleiner als der Schieflastgrenzwert ist. Dadurch kann erreicht werden, dass die Schieflast unterhalb des Schieflastgrenzwertes bleibt.

In der Beschreibung und den beigefügten Ansprüchen wird unter einem Bilanzpunkt ein Punkt des Stromnetzes verstanden, an welchen die Schieflastgrenze eingehalten werden soll. Ein solcher Bilanzpunkt kann bspw. ein elektrischer Hausanschluss, der Ausgang eines Mittelspannungstransformators oder ein virtuelles Energieversorgungsnetz sein.

Ferner ist vorgesehen, dass die Leistungsvorgabe umfasst, wie viel Ladeleistung aktuell zusätzlich entnommen werden darf, oder um wie viel die Ladeleistung reduziert werden muss. Dadurch können über die Leistungsvorgabe die Phasenströme geregelt werden, sodass angeschlossenen elektrischen Verbrauchern die größtmögliche elektrische Ladeleistung zur Verfügung gestellt werden kann, ohne dass die Schieflast den Schieflastgrenzwert überschreitet.

Ferner ist vorgesehen, dass, wenn der Phasenstrom einer Phase unterhalb eines Lastgrenzwertes liegt und der Phasenstrom dieser Phase kleiner ist als der geringste gemessene Phasenstrom einer anderen Phase zuzüglich des Schieflastgrenzwertes, wird über die Leistungsvorgabe signalisiert, dass zusätzliche Ladeleistung entnommen werden darf. Dadurch kann erreicht werden, dass wenn Leistungsreserven vorhanden sind, diese Leistungsreserven durch den angeschlossenen elektrischen Verbraucher auch ausgenutzt werden können. Die Höhe der zusätzlichen Leistung ergibt sich durch den Abstand zu den jeweiligen Grenzwerten, wobei der kleinere der beiden Abstände zu den Grenzwerten relevant ist für die mögliche Leistungserhöhung.

Ferner ist vorgesehen, dass, wenn der Phasenstrom einer Phase oberhalb eines Lastgrenzwertes liegt oder der Phasenstrom dieser Phase größer ist als der geringste gemessene Phasenstrom einer der anderen Phasen zuzüglich des Schieflastgrenzwertes, wird über die Leistungsvorgabe signalisiert, dass die Ladeleistung reduziert werden muss. Dadurch kann auf Laständerungen an dem Stromnetz reagiert werden, um eine Überlastung oder ein Überschreiten des Schieflastgrenzwertes zu verhindern. Die Höhe der zu reduzierenden Leistung ergibt sich durch die jeweilige Überschreitung des Lastgrenzwertes bzw. des Schieflastgrenzwertes, wobei bei Überschreitung beider Grenzwerte der höhere Wert relevant ist, sodass nach der durchgeführten Reduktion der Ladeleistung beide Grenzwerte eingehalten werden.

Eine vorteilhafte Lösung sieht vor, dass die Leistungsvorgabe eine aktuell maximale verfügbare Ladeleistung umfasst. Die Leistungsvorgabe kann dem angeschlossenen elektrischen Verbraucher damit signalisieren, wie viel maximal verfügbare Ladeleistung bereit steht, bspw. wenn der elektrische Verbraucher gerade angeschlossen wurde. Dadurch kann die Regelzeit, bis die optimale Ladeleistung eingestellt ist, verkürzt werden.

Eine weitere vorteilhafte Lösung sieht vor, dass die aktuell maximale verfügbare Ladeleistung der Phase unter Berücksichtigung zumindest der aktuellen Phasenströme, einer maximalen zulässigen Leistung der jeweiligen Phase und einer maximal zulässigen Schieflast zwischen den Phasen ermittelt wird. Dadurch kann bei der Bestimmung der maximal verfügbaren Ladeleistung sichergestellt werden, dass die Phase des Stromnetzes nicht überlastet wird und dass die Schieflast den Schieflastgrenzwert nicht überschreitet.

Eine zweckmäßige Variante sieht vor, dass, wenn ein elektrischer Verbraucher zum Laden angeschlossen wird, ermittelt wird, an welcher Phase der elektrische Verbraucher angeschlossen ist, und eine aktuell maximal verfügbare Ladeleistung der Phase, an der der elektrische Verbraucher angeschlossen ist, ermittelt wird, und dem elektrischen Verbraucher die aktuell maximale verfügbare Ladeleistung übermittelt wird. Wenn also der elektrische Verbraucher angeschlossen wird, erhält dieser die Information, wie viel Leistung er zum Laden über die Phase entnehmen darf. Dadurch wird in besonders kurzer Zeit die optimale Ausnutzung des Stromnetzes erreicht.

Eine weitere zweckmäßige Variante sieht vor, dass die Leistungsvorgaben derart gewählt werden, dass zusätzlich eine individuelle Last der einzelnen Phasen jeweils unterhalb eines Lastgrenzwertes gehalten wird. Dadurch wird die Überlastung der einzelnen Phasen des Stromnetzes verhindert, sodass ein sicherer und stabiler Betrieb ermöglicht wird. Vorteilhaft ist der Lastgrenzwert durch eine maximal zulässige Last am Bilanzpunkt gegeben.

Eine vorteilhafte Möglichkeit sieht vor, dass die Phasenströme am Bilanzpunkt fortlaufend ermittelt werden, und daraus fortlaufend die Leistungsvorgabe für die zum Laden angeschlossenen elektrischen Verbraucher angepasst und dem jeweiligen elektrischen Verbraucher übermittelt werden. Dadurch kann auf Änderungen der Lastbedingungen an den einzelnen Phasen reagiert werden. Insbesondere kann, wenn bspw. an der ersten Phase die Ladung des elektrischen Verbrauchers beendet wird und keine Leistung mehr entnommen wird, es zu einer Schieflast führen, wenn an den anderen Phasen elektrische Verbraucher hängen. Durch die fortlaufende Überwachung kann dies erkannt werden und somit die übrigen elektrischen Verbraucher in ihrer Ladeleistung gedrosselt werden, sodass der Schieflastgrenzwert nicht überschritten wird.

Eine weitere vorteilhafte Möglichkeit sieht vor, dass das Stromnetz ein dreiphasiges Drehstromnetz ist. Solche dreiphasigen Drehstromnetze werden üblicherweise von den Energieversorgungsunternehmen bereitgestellt.

Eine günstige Variante sieht vor, dass die elektrischen Verbraucher anhand der übermittelten Leistungsvorgaben die abgerufene Ladeleistung einstellen. Dadurch wird erreicht, dass tatsächlich eine Regelung der Ladeleistung erfolgt, sodass die Leistungsgrenzwerte und die Schieflastgrenzwerte eingehalten werden können. Es versteht sich, dass die elektrischen Verbraucher nicht zwingend die maximal zur Verfügung stehende Ladeleistung abrufen müssen.

Eine besonders vorteilhafte Lösung sieht vor, dass die zum Laden angeschlossenen elektrischen Verbraucher Elektrofahrzeuge sind. Gerade bei Elektrofahrzeugen treten sehr hohe Ladeleistungen auf, um die Ladezeit der Elektrofahrzeuge zu verkürzen, sodass die Problematik der Schieflast und der Überlastung einzelner Phasen besonders relevant ist.

In der Beschreibung und den beigefügten Ansprüchen werden unter Elektrofahrzeuge Kraftfahrzeuge verstanden, die zumindest teilweise durch einen Elektroantrieb angetrieben sind und einen elektrischen Energiespeicher aufweisen.

Weitere wichtige Merkmale und Vorteile der Erfindung ergeben sich aus den Unteransprüchen, aus der Zeichnung und aus der zugehörigen Figurenbeschreibung anhand der Zeichnung.

Bevorzugte Ausführungsbeispiele der Erfindung sind in der Zeichnung dargestellt und werden in der nachfolgenden Beschreibung näher erläutert.

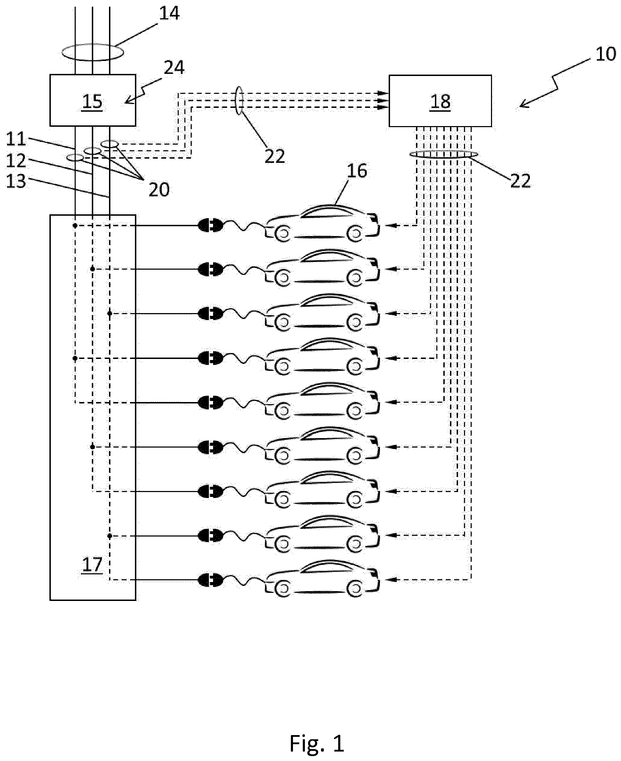

Die einzige Figur 1 zeigt ein Blockschaltbild eines Ladesystems, an welchem das erfindungsgemäße Verfahren durchgeführt werden kann.

Ein in Figur 1 dargestelltes System 10 umfasst einen Stromnetzanschluss 15 mit mehreren Phasen 14, beispielsweise einer ersten Phase 11, einer zweiten Phase 12 und einer dritten Phase 13, an welche elektrische Verbraucher, bspw. Elektrofahrzeuge 16, im folgenden Elektrofahrzeug 16 genannt, zum Laden der Elektrofahrzeuge 16 angeschlossen werden können. Ferner ist eine Steuerungseinrichtung 18 vorgesehen, welche das System 10 überwacht. Dazu ist je Phase 11,12,13, 14 eine Phasenstrommesseinrichtung 20 vorgesehen, welche die Werte der gemessenen Phasenströme an die Steuereinrichtung 18 übermittelt. Für die Übermittlung der Werte der gemessenen Phasenströme sind vorzugsweise Datenverbindungen 22 vorgesehen. Ferner sind Datenverbindungen 22 zwischen der Steuereinrichtung 18 und den Elektrofahrzeugen 16 vorgesehen, über welche eine Leistungsvorgabe von der Steuereinrichtung 18 aus an die Elektrofahrzeuge 16 übermittelt werden kann.

Alternativ zur Phasenstrommesseinrichtung 20 können auch Daten eines vernetzten Stromzählers ausgewertet werden, um auf die Phasenströme zu schließen.

Die Steuereinrichtung 18 steuert die Elektrofahrzeuge 16 derart an, dass die von den Elektrofahrzeugen 16 über die einzelnen Phasen 11, 12, 13, 14 entnommenen Ströme derart sind, dass die einzelnen Phasen 11, 12, 13, 14 innerhalb vorgegebener Betriebsparameter belastet werden.

Diese Betriebsparameter umfassen insbesondere eine maximale Leistung bzw. einen maximalen Phasenstrom der Phasen 11, 12, 13, 14. Des Weiteren können die Betriebsparameter auch eine maximale Schieflast zwischen den Phasen 11, 12, 13, 14 umfassen. Die Schieflast definiert sich durch den größten Unterschied der Leistungen, die über die Phasen 11, 12, 13, 14 abgerufen werden. Insbesondere ist die Schieflast die Lastdifferenz zwischen der Last der Phase 11, 12, 13, 14, über welche die größte Leistung abgegeben wird zu der Last der Phase 11, 12, 13, 14 über die die geringste Leistung abgegeben wird. Die Last bzw. die Schieflast kann dabei beispielsweise über die elektrische Leistung oder den elektrischen Strom definiert werden.
Wird nun ein Kraftfahrzeug 16 zum Laden an eine der Phasen 11, 12, 13, 14 angeschlossen, ermittelt die Steuerungseinrichtung, wie hoch die maximal verfügbare Ladeleistung für das Kraftfahrzeug 16 ist und übermittelt diese aktuell maximale verfügbare Ladeleistung an dieses Kraftfahrzeug 16. Das Kraftfahrzeug 16 wird dann maximal diese Ladeleistung über die Phase 11, 12, 13, 14 beziehen. Im weiteren Ladevorgang wird die Steuereinrichtung 18 fortlaufend die Phasenströme der einzelnen Phasen 11, 12, 13, 14 überwachen und ggf. Leistungsvorgaben an die Kraftfahrzeuge 16 übermitteln, welche den Kraftfahrzeugen 16 signalisieren, dass entweder mehr Ladeleistung abgerufen werden darf, oder dass die Ladeleistung reduziert werden muss.

Wenn bspw. nur ein einzelnes Elektrofahrzeug 16 an einer der Phasen 11, 12, 13, 14 angeschlossen ist, ist die maximal verfügbare Ladeleistung durch die maximale Schieflast gegeben. Die maximale erlaubte Schieflast beträgt üblicherweise 20 Ampere. Daraus ergibt sich, dass das Elektrofahrzeug 16 lediglich mit 20 Ampere laden kann.

Falls ein zweites Elektrofahrzeug 16 an eine weitere Phase 11, 12, 13, 14 angeschlossen wird, kann dieses ebenfalls mit 20 Ampere geladen werden. Wenn schließlich auch an einer dritten Phase 11, 12, 13, 14 ein Elektrofahrzeug 16 angeschlossen wird, ergibt sich somit ein Lastausgleich, wodurch die maximale Ladeleistung nicht mehr durch die Schieflast begrenzt wird, sondern durch die individuelle maximale Last an den einzelnen Phasen 11, 12, 13, 14.

Da die Ladeleistung der Elektrofahrzeuge 16 nicht notwendiger Weise immer die maximal verfügbare Ladeleistung ist, erfolgt auch bei drei angeschlossenen Elektrofahrzeugen 16 eine fortlaufende Überwachung der Phasenströme, um ggf. Ladeströme einzelner Elektrofahrzeuge 16 drosseln zu können, um eine Überschreitung der maximal zulässigen Schieflast zu verhindern.

Es versteht sich, dass auch mehr als ein Elektrofahrzeug 16 zu Laden an einer einzelnen Phase 11, 12,13, 14 angeschlossen sein kann. Somit können mehr als Elektrofahrzeuge 16 gleichzeitig geladen werden, als Phasen 11, 12, 13, 14 am Stromnetz zur Verfügung stehen.

## Patentansprüche

1. Verfahren zum Laden von elektrischen Verbrauchern (16), beispielsweise von Elektrofahrzeugen, an einem Stromnetz (15) mit mehreren Phasen (11, 12, 13, 14),
- wobei an einem Bilanzpunkt (24) Phasenströme der Phasen (11, 12, 13, 14) des Stromnetzes (15) gemessen werden,
- wobei für jeden über den Bilanzpunkt (24) an dem Stromnetz zum Laden angeschlossenen elektrischen Verbrauchern (16) bestimmt wird, über welche Phase (11, 12, 13, 14) der elektrische Verbraucher angeschlossen ist, und
- wobei eine Schieflast der Phasen (11, 12, 13, 14) unterhalb eines Schieflastgrenzwertes gehalten wird, indem jedem zum Laden angeschlossenen elektrischen Verbraucher (16) eine Leistungsvorgabe übermittelt wird,
- wobei die Leistungsvorgabe umfasst, wie viel Ladeleistung aktuell zusätzlich entnommen werden darf oder um wie viel die Ladeleistung reduziert werden muss,
- wobei wenn der Phasenstrom einer Phase ( 11, 12, 13, 14) oberhalb eines Lastgrenzwertes liegt oder der Phasenstrom dieser Phase (11, 12, 13, 14) größer ist als der geringste gemessene Phasenstrom einer der anderen Phasen (11, 12, 13, 14) zuzüglich des Schieflastgrenzwertes, wird über die Leistungsvorgabe signalisiert, dass die Ladeleistung reduziert werden muss,
**dadurch gekennzeichnet,**
- **dass**, wenn der Phasenstrom einer Phase (11, 12, 13, 14) unterhalb des Lastgrenzwertes liegt und der Phasenstrom dieser Phase (11, 12, 13, 14) kleiner ist als der geringste gemessene Phasenstrom einer der anderen Phasen (11, 12, 13, 14) zuzüglich des Schieflastgrenzwertes, wird über die Leistungsvorgabe signalisiert, dass zusätzliche Ladeleistung entnommen werden darf.

2. Verfahren nach Anspruch 1,
**dadurch gekennzeichnet,**
**dass** die Leistungsvorgabe eine aktuell maximale verfügbare Ladeleistung umfasst.

3. Verfahren nach Anspruch 2,
**dadurch gekennzeichnet,**
**dass** die aktuell maximale verfügbare Ladeleistung der Phase (11, 12, 13, 14) unter Berücksichtigung zumindest der aktuellen Phasenströme, einer maximalen zulässigen Leistung der jeweiligen Phase (11, 12, 13, 14) und einer maximal zulässigen Schieflast zwischen den Phasen (11, 12, 13, 14) ermittelt wird.

4. Verfahren nach Anspruch 2 oder 3,
**dadurch gekennzeichnet,**
**dass** wenn ein elektrischer Verbraucher (16) zum Laden angeschlossen wird, ermittelt wird, an welcher Phase (11, 12, 13, 14) der elektrische Verbraucher (16) angeschlossen ist, und eine aktuell maximale verfügbare Ladeleistung der Phase (11, 12, 13, 14), an der der elektrischer Verbraucher angeschlossen ist, ermittelt wird, und dem elektrischen Verbraucher (16) die aktuell maximale verfügbare Ladeleistung übermittelt wird.

5. Verfahren nach einem der Ansprüche 1 bis 4,
**dadurch gekennzeichnet,**
**dass** die Leistungsvorgaben derart gewählt werden, dass zusätzlich eine individuelle Last der einzelnen Phasen (11, 12, 13, 14) jeweils unterhalb eines Lastgrenzwertes gehalten wird.

6. Verfahren nach einem der Ansprüche 1 bis 5,
**dadurch gekennzeichnet,**
**dass** die Phasenströme am Bilanzpunkt (24) fortlaufend ermittelt werden, und daraus fortlaufend die Leistungsvorgaben für die zum Laden angeschlossenen elektrischen Verbraucher (16) angepasst und dem jeweiligen elektrischen Verbraucher (16) übermittelt werden.

7. Verfahren nach einem der Ansprüche 1 bis 6,
**dadurch gekennzeichnet,**
**dass** die elektrischen Verbraucher (16) anhand der übermittelten Leistungsvorgaben die abgerufene Ladeleistung einstellen.

8. Verfahren nach einem der Ansprüche 1 bis 7,
**dadurch gekennzeichnet,**
**dass** zum Laden angeschlossenen elektrischen Verbraucher (16) Elektrofahrzeuge sind.

## Claims

1. Method for charging electric consumers (16), for example electric vehicles, at a power supply network (15) with multiple phases (11, 12, 13, 14),
- whereby phase currents of the phases (11, 12, 13, 14) of the power supply network (15) are measured at a balance point (24),
- whereby for each of the electric consumers (16) connected to the power supply network for charging via the balance point (24) the phase (11, 12, 13, 14) to which the electric consumer is connected is determined, and
- whereby an unbalanced load of the phases (11, 12, 13, 14) is held below an unbalanced load threshold value by communicating a power specification to each electric consumer (16) connected for charging,
- whereby the power specification includes how much charging power may be additionally drawn at the time concerned, or by how much the charging power must be reduced,
- whereby when the phase current of one phase (11, 12, 13, 14) lies above a load threshold value or the phase current of this phase (11, 12, 13, 14) is greater than the lowest measured phase current of one of the other phases (11, 12, 13, 14) with the addition of the unbalanced load threshold value, the fact that the charging power must be reduced is signalled via the power specification,
**characterised in**
- **that** when the phase current of one phase (11, 12, 13, 14) lies below the load threshold value and the phase current of this phase (11, 12, 13, 14) is smaller than the lowest measured phase current of one of the other phases (11, 12, 13, 14) with the addition of the unbalanced load threshold value, the fact that additional charging power may be drawn is signalled via the power specification.

2. Method according to claim 1,
**characterised in**
**that** the power specification includes a maximum charging power available at the time concerned.

3. Method according to claim 2,
**characterised in**
**that** the maximum available charging power of the phase (11, 12, 13, 14) at the time concerned is determined taking into account at least the phase currents at the time concerned, a maximum permissible power of the respective phase (11, 12, 13, 14) and a maximum permissible unbalanced load between the phases (11, 12, 13, 14).

4. Method according to claim 2 or 3,
**characterised in**
**that** when an electric consumer (16) is connected for charging, the phase (11, 12, 13, 14) to which the electric consumer (16) is connected is determined, and a maximum charging power available at the time concerned of the phase (11, 12, 13, 14) to which the electric consumer is connected is determined, and the maximum charging power available at the time concerned is communicated to the electric consumer (16).

5. Method according to any of claims 1 to 4,
**characterised in**
**that** the power specifications are selected in such a way that an individual load of the individual phases (11, 12, 13, 14) is in each case held below a load threshold value.

6. Method according to any of claims 1 to 5,
**characterised in**
**that** the phase currents at the balance point (24) are determined continuously, and on that basis the power specifications for the electric consumers (16) connected for charging are continuously adjusted and communicated to the respective electric consumer (16).

7. Method according to any of claims 1 to 6,
**characterised in**
**that** the electric consumers (16) adjust the charging power drawn off with reference to the communicated power specifications.

8. Method according to any of claims 1 to 7,
**characterised in**
**that** the electric consumers (16) connected for charging are electric vehicles.

## Revendications

1. Procédé de charge de consommateurs électriques (16), par exemple de véhicules électriques, à un réseau électrique (15) avec plusieurs phases (11, 12, 13, 14),
- dans lequel des courants de phase des phases (11, 12, 13, 14) du réseau électrique (15) sont mesurés à un point d'équilibre (24),
- dans lequel pour chaque consommateur électrique (16) raccordé au réseau électrique pour la charge par le biais du point d'équilibre (24), phase (11, 12, 13, 14) par le biais de laquelle le consommateur électrique est raccordé, et
- dans lequel une charge déséquilibrée des phases (11, 12, 13, 14) est maintenue en dessous d'une valeur limite de charge déséquilibrée en transmettant une prescription de puissance à chaque consommateur électrique (16) raccordé pour la charge,
- dans lequel la prescription de puissance comprend de combien la puissance de charge peut être retirée actuellement en complément ou de combien la puissance de charge doit être réduite,
- dans lequel lorsque le courant de phase d'une phase (11, 12, 13, 14) est au-dessus d'une valeur limite de charge ou le courant de phase de cette phase (11, 12, 13, 14) est supérieur au plus petit courant de phase mesuré d'une des autres phases (11, 12, 13, 14) en plus de la valeur limite de charge déséquilibrée, il est signalisé par le biais de la prescription de puissance que la puissance de charge doit être réduite,
**caractérisé en ce que**
- lorsque le courant de phase d'une phase (11, 12, 13, 14) est en dessous de la valeur limite de charge et le courant de phase de cette phase (11, 12, 13, 14) est inférieur au plus petit courant de phase mesuré d'une des autres phases (11, 12, 13, 14) en plus de la valeur limite de charge déséquilibrée, il est signalisé par le biais de la prescription de puissance qu'une puissance de charge supplémentaire peut être retirée.

2. Procédé selon la revendication 1,
**caractérisé en ce que**
la prescription de puissance comprend une puissance de charge disponible actuellement maximale.

3. Procédé selon la revendication 2,
**caractérisé en ce que**
la puissance de charge disponible actuellement maximale de la phase (11, 12, 13, 14) est déterminée par la prise en compte au moins des courants de phase actuels, d'une puissance admissible maximale de la phase (11, 12, 13, 14) respective et d'une charge déséquilibrée admissible maximale entre les phases (11, 12, 13, 14).

4. Procédé selon la revendication 2 ou 3,
**caractérisé en ce que**
lorsqu'un consommateur électrique (16) est raccordé pour la charge, il est déterminé à quelle phase (11, 12, 13, 14) le consommateur électrique (16) est raccordé, et une puissance de charge disponible actuellement maximale de la phase (11, 12, 13, 14) à laquelle le consommateur électrique est raccordé est déterminée et la puissance de charge disponible actuellement maximale est transmise au consommateur électrique (16).

5. Procédé selon l'une quelconque des revendications 1 à 4,
**caractérisé en ce que**
les prescriptions de puissance sont choisies de telle sorte que, en plus, une charge individuelle des phases individuelles (11, 12, 13, 14) est maintenue respectivement en dessous d'une valeur limite de charge.

6. Procédé selon l'une quelconque des revendications 1 à 5,
**caractérisé en ce que**
les courants de phase sont déterminés en continu au niveau du point d'équilibre (24), et de là les prescriptions de puissance pour les consommateurs électriques (16) raccordés pour la charge sont adaptées en continu et transmises au consommateur électrique (16) respectif.

7. Procédé selon l'une quelconque des revendications 1 à 6,
**caractérisé en ce que**
les consommateurs électriques (16) règlent la puissance de charge appelée à l'aide des prescriptions de charge transmises.

8. Procédé selon l'une quelconque des revendications 1 à 7,
**caractérisé en ce que**
des consommateurs électriques (16) raccordés pour la charge sont des véhicules électriques.
